# EUROPEAN PATENT APPLICATION

(11) **EP 2 145 676 A1**
(43) Date of publication of application: **20.01.2010**
(21) Application number: 09165391.5
(22) Date of filing: 14.07.2009
(51) Int. Cl.: B01F 5/10, B01F 5/04, B01F 5/08, B01J 19/24, G01N 1/20, B01F 3/04, B01F 3/08, B01F 5/00

(54) **Device and method for homogenizing fluids**

(30) Priority: 14.07.2008 NL 2001803
(71) Applicant: Kimman Process Solutions B.V., 3161 GN Rhoon (NL)
(72) Inventor: Verloop, Erik Michiel, 3034 ZL Rotterdam (NL); Verloop, Pieter Charles, 2517 XJ Den Haag (NL)
(74) Representative: Vermeulen, Martijn

(57) **Abstract**

The present invention relates to a device and method for homogenizing fluids in a pipeline (1), comprising
- a supply tube (2) for supplying an injection fluid,
- a discharge tube (3) connected to the supply tube, and
- a plurality of outlet nozzles (51) in the discharge tube, configured to provide injection fluid jets in the pipeline,

**characterized in that** at least two outlet nozzles are spaced in a main flow direction of the pipeline and that the at least two outlet nozzles are configured to provide a fluid jet which is at least partially directed opposite to the direction of the main flow direction.

## Description

The invention relates to a device for homogenizing fluids, in particular for homogenizing fluids in a pipe line for taking representative samples.

Multiple composition liquids and gasses, like e.g. crude oil, blending oils and chemicals, comprise immiscible components which are often perceived as being valuable. Determination of the volume fractions of the different components is important for custody transfer, blending and plant control. Measurement devices and analyzers have difficulties with the accurate determination of the exact composition of these complex fluids, due to layer formation in the transfer line. A solution is provided by temporary homogenizing, obtained by using the energy from the main flow (e.g. static mixers) or an external power source. After homogenizing, analysis can be performed until sagging of the e.g sediments occurs and the layer formation is formed again.

US 3,734,111 discloses a method and apparatus for mixing a fluid travelling in a pipe section with a second fluid introduced into the pipe section. This second fluid is introduced into the pipe section by sparging this fluid into the flow. For sparging the second fluid, a perforated conical baffle and an elongated sparger are provided. The first disruption in the flow is induced by sparging the second fluid through the elongated sparger. The perforated cap is teed into the throat of the frusto-conical baffle. Through the flow of the first fluid through the frusto-conical baffle, in combination with the sparging of the second fluid through the perforated cap, the two fluids are mingled.

A drawback of the above disclosed apparatus is that the comingling of the two fluids actually consists of two steps. First, only the second fluid is added by sparging it through the elongated sparger. And for the total comingling flows this mix through the frusto-conical baffle, while more of fluid two is sparged into the flow.

Another drawback of the above apparatus is the complexity of the apparatus. The whole device consists of a vertical sparger, a frusto-conical baffle, which is mounted on a cross-sectional wall in a pipe line, a perforated cap, and a restriction, another cross-sectional wall. When this device is mounted into a pipe line, it takes a lot of effort and time to place the apparatus with all its sub-parts. The two cross-sections placed in the pipeline, and part of the mixing device are obstacles for the flow, through which there will be a concentration or sedimentation in the corners between the pipeline and the cross-sectional walls. Another drawback of the disclosed apparatus is the installing of the apparatus. Two cross-sectional walls have to be placed, as well as the frusto-conical baffle, the perforated cap and the elongated sparger. All these elements are separate parts and have to be placed as separate parts, one at the time.

GB2357710 discloses a similar device as stated above, comprising a more simplistic construction. Drawbacks of this system include a limited mixing length and a low energy efficiency, resulting in inadequate mixing and large power consumption

The aim of the present invention is to provide a device for homogenizing a fluid without one or more of the mentioned drawbacks, or at least to provide an alternative therefore.

This aim is achieved with a device for homogenizing fluids in a pipeline, comprising:
- a supply tube for supplying an injection fluid,
- a discharge tube connected to the supply tube, and
- a plurality of outlet nozzles in the discharge tube, arranged to provide injection fluid jets in the pipeline,
**characterized in that**, after mounting of the device in a pipeline, at least two outlet nozzles are spaced in a main flow direction of the pipeline and that the at least two outlet nozzles are arranged to provide an injection fluid jet which is at least partially directed opposite to the main flow direction.

In this device injection fluid, for instance fluid taken from the pipeline is introduced from the supply tube to the discharge tube, where due to pressure build up in the discharge tube the fluid is ejected from the discharge tube through the nozzles. The nozzles are fixed on injection locations which are spaced in the main direction of flow of the pipeline so that injection fluid jets are jetted into the fluid in the pipeline in distinct locations spaced in the axial direction of the pipeline.

The advantage of directing the fluid jets towards the main fluid stream at multiple locations spaced in the axial direction of the pipeline is that a better homogenizing is obtained.

In this application the term tube is used to indicate a body which delimits a space through which a fluid can flow. This term is not limited to cylinder shaped bodies but may refer to any suitable shape or form. Preferably, the discharge tube has a substantially cylindrical shape.

In an embodiment, the discharge tube is elongate and has a longitudinal axis, whereby the discharge tube is to be arranged in the pipeline substantially parallel to the pipeline, i.e. to the direction of the main flow in the pipeline, and the at least two nozzles are spaced on the discharge tube parallel to the longitudinal axis of the discharge tube.

In an embodiment, the at least two outlet nozzles are arranged to provide an injection fluid jet which is at least partially directed opposite to the main flow direction, and at least partially upwards. The angle of the injection fluid jets ejected from the at least two nozzles is at least 91 degrees with respect to the main flow direction in the pipeline, preferably in the range of 95 to 180 degrees, more preferably 110 to 165 degrees, and even more preferably 130 to 150 degrees with respect to the main flow direction in the pipeline. The angle of the nozzles with respect to the vertical plane running through the longitudinal axis of the pipeline, i.e. the main flow direction, is in the range of 80 to 160 degrees, preferably in the range of 100 to 140 degrees.

In an embodiment, the discharge tube is arranged in a lower half of the cross section of the pipeline, preferably in a bottom quarter of the pipeline.

In an embodiment, the at least two outlet nozzles are arranged near the bottom of the pipeline, and wherein the injection fluid jets preferably are directed substantially parallel to an inner surface of the pipeline near the bottom of the pipeline. By providing the injection locations close to the bottom of the pipeline, and sedimentation at the bottom of the pipeline may be agitated to mix with other components of the fluid flow in the pipeline.

In an embodiment, the at least two outlet nozzles are directed in substantially the same direction. By providing multiple outlet nozzles directed in the same direction the agitation of fluid components may be improved.

In an embodiment, the discharge tube is mainly parallel orientated with respect to an axis of the pipeline. In such embodiment the at least two nozzle may be arranged in a row substantially parallel to the main flow direction in the pipeline. Preferably multiple rows of nozzles are provided in the discharge tube.

In an embodiment, the supply tube and discharge tube are connected by a curved tube part, wherein the radius of the curve is at least half the inner diameter of the supply tube. Such arrangement has the advantage that the fluid stream is guided fluently from the supply tube into the discharge tube, without applying too much pressure on the tube in the curve between the supply tube and discharge tube.

In an embodiment, at least two nozzles are provided radially spaced in the wall of the discharge tube, for introducing fluid all around the discharge tube at least partially in the direction opposite to the direction of the main stream, for further improving homogenizing the fluid into a homogenous fluid. Preferably multiple rows of nozzles are provided in the discharge tube, whereby the rows are radially spaced in the wall of the discharge tube.

In an embodiment, the discharge tube comprises an end part closing the end of the discharge tube opposite the supply tube.

In an embodiment, the end part comprises at least two nozzles, which are preferably at least partially directed in the direction opposite to the main stream direction. The advantage of the nozzles in the end part is that they can easily be directed into the opposite direction of the direction of the main stream and less energy is needed for a fluid jet through the nozzles, because of the built up pressure in the discharge tube through closing off the discharge tube by the end part.

In an embodiment, the device comprises a fluid inlet to be arranged downstream of the discharge tube in the pipeline, and a pump connected to the fluid inlet and the supply tube, wherein the pump is configured to pump fluid out of the pipeline through the fluid inlet and into the supply tube. Such arrangement has the advantage that homogenizing of the fluid in the main stream can be with fluid taken out of the pipeline so that no extra fluid or gas has to be introduced into the fluid in the pipeline.

In an embodiment, the combination of the supply tube and discharge tube may be configured to be retractably placed in a pipeline.

In a preferred embodiment of the device, the discharge tube is to be placed in a lower part of the pipeline and comprises two rows of nozzles, wherein after mounting of the device in the pipeline each of the rows run parallel to the main flow direction in the pipeline so that the nozzles of each row are spaced in a main flow direction of the pipeline. Furthermore, the nozzles of each row are arranged to provide an injection fluid jet which is at least partially directed opposite to the main flow direction, and preferably substantially parallel to the inner surface of the pipeline at the injection location. In such embodiment, the injection fluid jets each have a vertical and horizontal vector component in the plane perpendicular to the main flow direction in the pipeline, so that the heavier fluid components and sedimentations in the lower part of the pipeline are agitated and mixed with lighter components present in the upper part of the pipeline.

The device according to the invention can be made part of a metering skid, comprising of measurement equipment and/or instrumentation placed between or parallel of the inlet and the supply tube.

The invention further relates to a method as claimed in claim 11.

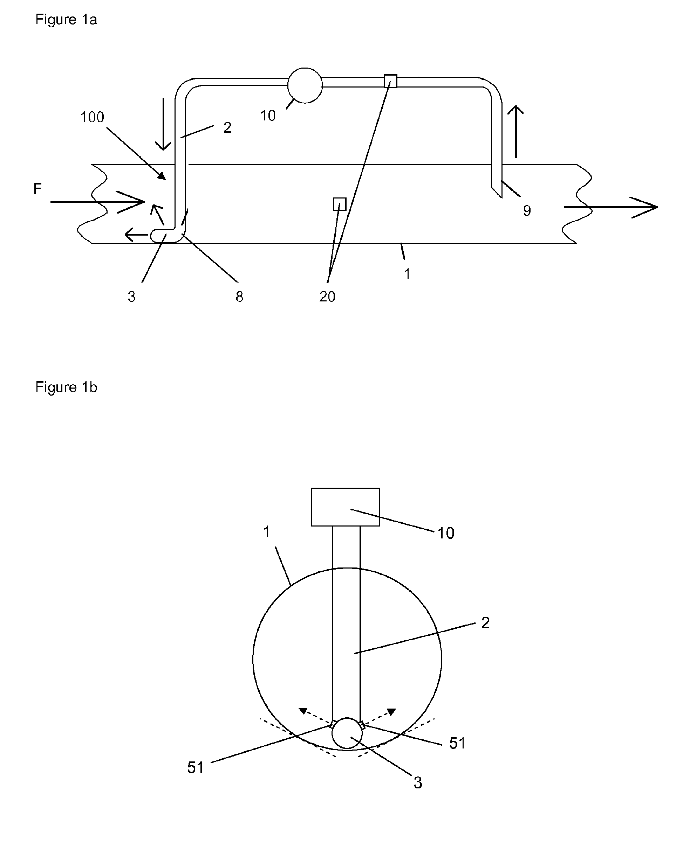

Different examples of embodiments are described in the following figures, wherein
- Figure 1a shows a side view of a homogenizing device with a pump and fluid inlet;
- Figure 1 b shows a cross section of a homogenizing device;
- Figure 2 shows a perspective view of a part of the homogenizing device of Figure 1;
- Figures 3a, 3b, and 3c show side views/cross-sections of the part of the homogenizing device shown in Figure 2; and
- Figures 4a, 4b, and 4c show alternative embodiments of the part shown in Figure 2.

Figure 1a shows a homogenizing device 100 comprising a supply tube 2 and a discharge tube 3. The discharge tube 3 is arranged in a fluid flow F in a main pipeline 1. The fluid flow may comprise different components which may not be miscible, and for instance due to difference in weight of the components comprise layers with the different components flowing through the pipe. In such fluid flow it is hard to make reliable measurements, or to be able to take good, representative samples, for example to perform a qualitative control.

The homogenizing device 100 is configured to provide a temporary homogeneous flow downstream of the homogenizing device 100, in order to make qualitative reliable measurements in the flow F possible, for instance with a sensor 20, or by taking samples from the fluid flow F at a location downstream, but relative close by the discharge tube 3 of the homogenizing device 100. Other applications involve sensor equipment and instrumentation placed in the supply line 2.

The homogenizing of the fluid flow is obtained by injecting a fluid in the fluid flow F so that the fluid flow F is mixed. For this reason, the supply tube 2 of the homogenizing device 100 is coupled to an outlet of a pump 10. The inlet of the pump 10 is coupled to a fluid inlet 9. The fluid inlet 9 is arranged in pipeline. The pump 10 receives fluid from the mainstream, through the fluid inlet 9. The fluid is pumped into the supply tube 2, through the curved tube part 8 into and through the discharge tube 3, whereby nozzles are provided produce fluid jets for optimal homogenizing the fluid.

With the flow flowing in the opposite direction of the main flow, and being only slightly redirected by the small jets to provide transfer line fluid dispersion, pressure losses will remain small and energy transfer to the transfer line will be optimal. The result is a relative high kinetic potential of the return fluid exiting the jet-nozzles, assuring homogeneous mixture over time of the transfer line fluid.

In Figure 1a is the fluid inlet located down streams, but obviously it is also possible to locate the fluid inlet 9 upstream, whereby the upstream- and downstream distance of the fluid inlet 9, with respect to the supply tube 2, can be varied. In alternative embodiment another source of injection fluid may be used.

The supply tube 2, curved tube part 8, and the discharge tube 3 may be made of any suitable material, including steel or plastics material.

Figure 1 b shows a schematic cross section of a device according to the invention. Figure 1 b shows a supply tube 2 and a discharge tube 3 arranged in a pipeline 1. A pump 10 is provided to pump injection fluid, which is preferably taken out of the pipeline 1 downstream of the discharge tube 3, via the supply tube 2 towards the discharge tube 3. The discharge tube 3 comprises two rows of nozzles 51. Of each row only one nozzle 51 is shown in Figure 1 b. The rows are arranged substantially parallel to the main flow direction so that the nozzles 51 are spaced in the main flow direction.

The discharge tube 3 is arranged in a lower part of the pipeline 1, in particular in the lower quarter of the cross section of the pipeline. The nozzles 51 are arranged and directed to provide an injection fluid jet which is not only opposite the main flow direction but also partially upwards and partially away from the centre of the pipeline. The resulting vector in the plane perpendicular to the main flow direction is substantially parallel to the inner surface of the pipeline at the injection location (shown by dashed lines). By this direction a proper agitation of heavier components of the fluid flow in the pipeline is obtained. By agitating the heavier components the homogenization of the different components of the fluid flow in the pipeline 1 is promoted.

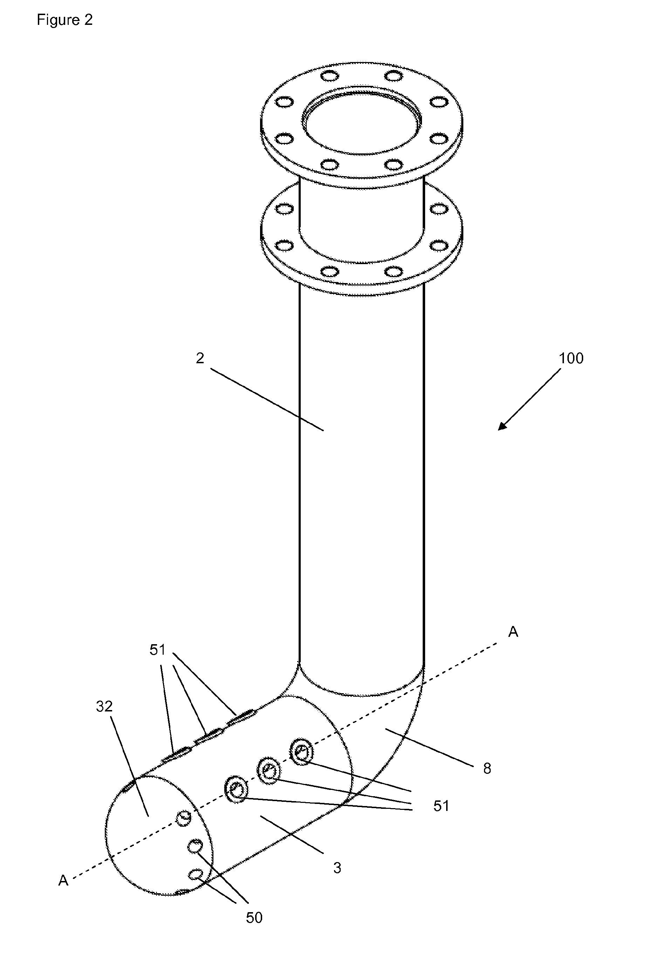

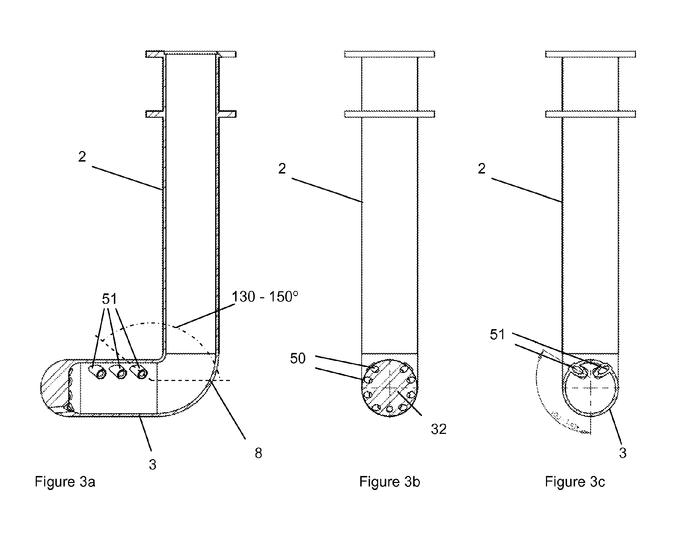

Figure 2, and Figures 3a, 3b and 3c show the supply tube 2 for supplying fluid, the discharge tube 3 for discharging fluid, and a curved tube part 8 connecting the supply tube 2 and the discharge tube 3 in more detail. In the discharge tube 3 nozzles 50, 51 are provided for providing a fluid jet into the main fluid flow F. The discharge tube 3 is closed off by an end part 32. The longitudinal axis of the discharge tube 3 is arranged parallel to the main flow direction of fluid through the pipeline 1.

The supply tube 2 is connected to the discharge tube 3 with the curved tube part 8. The curved tube part 8 is curved for maintaining the kinetic energy stored in the flow flowing through the supply tube 2 and the discharge tube 3 and therewith increase the speed/force of the fluid jets emerging from the nozzles.

The supply tube 2 runs substantially perpendicular to the main flow direction of the fluid flow F, and the discharge tube 3 runs substantially parallel to the main direction of flow.

In the wall of the discharge tube 3 nozzles 51 are provided, which are spaced in the direction of the main flow of the fluid through the pipeline 1. By spacing the nozzles in the main flow direction of the fluid flow F, a more efficient mixing and homogenizing of the fluid flow is obtained. In this embodiment the nozzles 51 are spaced in the direction parallel to the longitudinal axis A-A of the discharge tube 3, but other embodiments in which the nozzles are spaced in the direction of the main stream direction of the fluid flow F are also contemplated, in particular when the discharge tube is not cylindrical or not arranged parallel to the main direction of flow in the pipeline 1.

The spaced nozzles 51 are arranged in the wall of the discharge tube 3 and directed partially opposite the direction of the main flow F. When the fluid from the discharge tube 4 is discharged through the spaced nozzles 51 mainly into the direction of the main stream F, the flow in the main stream F is disrupted so that the fluid in the pipeline 1 is homogenized.

It is advantageous that the discharge tube 3 is arranged at or close to the bottom of the pipeline 1, since more heavy fluid and particles are located at the bottom part of the pipeline 1. By providing fluid jets close to these heavier fluids and/or particles the fluid flow is homogenized more easily. The spaced nozzles 51 are directed partially upwards mainly parallel to the inner surface of the pipeline (as indicated in Figure 1 b). In an alternative embodiment the direction may be more downwards towards the inner surface.

Thus, the fluid jets emerging from the nozzles 51 have a first horizontal component in the opposite direction of the main flow F, and in the plane perpendicular to the main flow, a vertical vector component directed upwards and a horizontal vector component away from the centre of the pipeline in order to agitate the different components of the fluid flow.

The angle of the injection fluid jets ejected from the at least two nozzles is in the range of 130 to 150 degrees, for instance 140 degrees, with respect to the main flow direction in the pipeline, as indicated in Figure 3a. The angle of the nozzles with respect to the vertical plane running through the longitudinal axis of the pipeline, i.e. the main flow direction, is in the range of 100 to 140 degrees, as indicated in Figure 3c, for instance 120 degrees.

In figure 2 two rows of nozzles 51 are shown, and one row of radially spaced nozzles 50. For better homogenizing of the main stream F more radially spaced nozzles 50 can be provided in the wall of the end part 32 of the discharge tube 3. These radially spaced nozzles 50 are also directed mainly opposite to the direction of the main stream F, to induce a maximum disruption of the main stream F and to get an optimal mix of the fluid 4. This is the same with the radially spaced nozzles 50 in the end part 32, for better homogenizing, more nozzles 50 can be provided. The nozzles 50 could also be provided helically spaced around the discharge tube 3. The present invention is not limited to the foregoing example.

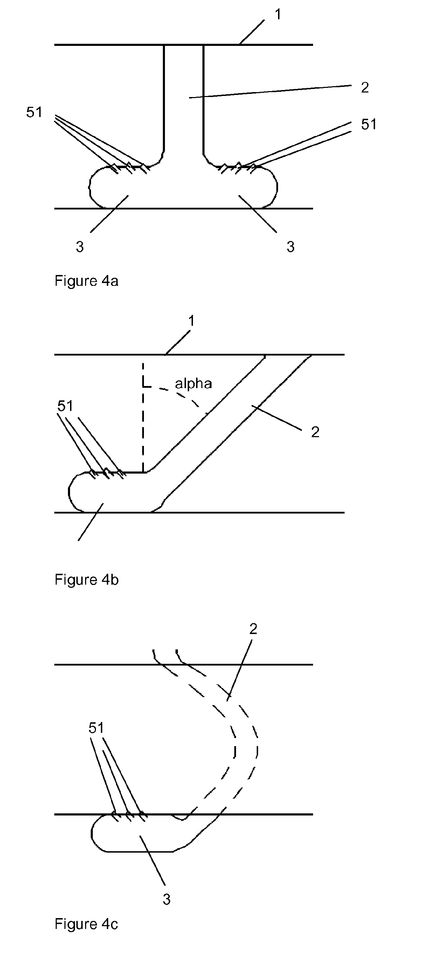

Figures 4a, 4b and 4c show alternative embodiments of a homogenizing device according to the invention. In all embodiments at least two of the injection nozzles 51 are arranged spaced in the main flow direction of the pipeline and are configured to provide a injection fluid jet at least partially opposite to the main flow direction in the pipeline 1.

Figure 4a shows an embodiment of a combination of one supply tube 2 and two discharge tubes 3. The discharge tubes 3 are arranged at opposite ends of the supply tube 2 along the same longitudinal axis. The nozzles 51 of one of the discharge tubes 3 are arranged opposite the main direction of flow in the pipeline 1.

Figure 4b shows an embodiment having a supply tube 2 being arranged at an obtuse angle alpha with respect to the discharge tube 3. The angle alpha is larger than 90 degrees and preferably between 100 and 160 degrees. The advantage of an obtuse angle may be that the flow in the pipeline 1 is less influenced by the presence of the supply tube 2. Furthermore, the obtuse angle may have the advantage that the discharge tube 2 may more easily be located at a desired position in the pipeline 1 and the combination of supply tube 2 and discharge tube 3 may more easily be arranged or in the pipeline 1.

Figure 4c shows an embodiment wherein the supply tube 2 and the discharge tube 3 are arranged outside the pipeline 1. The nozzles 51 are arranged in the wall of the pipeline 51 so that the nozzles 51 may provide an injection fluid jet in the main flow in the pipeline 1. By arranged the supply tube 2 and the discharge tube outside the pipeline 1, the flow in the pipeline is not obstructed by the presence of these parts.

## Claims

1. A device for homogenizing fluids in a pipeline, comprising:
- a supply tube for supplying an injection fluid,
- a discharge tube connected to the supply tube, and
- a plurality of outlet nozzles in the discharge tube, arranged to provide injection fluid jets in the pipeline when fluid is pumped from the supply tube in the discharge tube,
**characterized in that**, after mounting of the device in a pipeline, at least two outlet nozzles are spaced in a main flow direction of the pipeline and that the at least two outlet nozzles are arranged to provide an injection fluid jet which is at least partially directed opposite to the main flow direction.

2. The device according to claim 1, wherein the at least two outlet nozzles are arranged to provide an injection fluid jet which is at least partially directed opposite to the main flow direction, and at least partially upwards.

3. The device according to claim 1 or 2, wherein the discharge tube is arranged in a lower part of the pipeline so that the at least two outlet nozzles are arranged near the bottom of the pipeline, and wherein the injection fluid jets are preferably directed substantially parallel to an inner surface of the pipeline near the bottom of the pipeline.

4. The device according to any of the claims 1-3, wherein the at least two outlet nozzles are directed in substantially the same direction.

5. The device according to any of the claims 1-4, wherein the discharge tube is to be orientated mainly parallel with respect to an axis of the pipeline.

6. The device according to any of the claims 1-5, wherein the supply tube and discharge tube are connected trough a curved tube part, wherein the radius of the curved tube part is at least half the inner diameter of the supply tube.

7. The device according to any of the claims 1-6, wherein at least two nozzles are provided radially spaced in the wall of the discharge tube.

8. The device according to any of the claims 1-7, wherein the discharge tube comprises an end part to close off the discharge tube.

9. The device according to claim 8, wherein the end part comprises at least two nozzles.

10. The device according to claim 9, wherein the nozzles in the wall of the end part are configured to provide a fluid jet which is at least partially directed in the direction opposite to the main stream direction.

11. The device according to any of the claims 1-10, further comprising:
- a fluid inlet to be arranged downstream of the discharge tube in the pipeline,
- a pump connected to the fluid inlet and the supply tube, and wherein the pump is configured to pump fluid out of the pipeline through the fluid inlet and into the supply tube.

12. Method for homogenizing fluids in a fluid pipeline, comprising the step of injecting an injection fluid in a main stream of the fluids **characterized by** injecting the injection fluid at injection locations spaced in a main flow direction in the pipeline, and injecting the injection fluid in a direction at least partially opposite the main flow direction.

13. The method according to claim 12, wherein the direction of injecting the injection fluid is at least partially opposite the main flow direction and at least partially upwards.

14. The device according to any of the claims 11-13, wherein the injecting of the injection fluid is performed near the bottom of the pipeline, and wherein the injection fluid jets preferably are directed substantially parallel to an inner surface of the pipeline near the bottom of the pipeline.

15. The method according to any of the claims 11-14, further comprising the step of taking the injection fluid from the main stream and pumping it back into the main stream.
